# EUROPÄISCHE PATENTSCHRIFT

(11) **EP 2 850 933 B1**
(45) Veröffentlichungstag und Bekanntmachung des Hinweises auf die Patenterteilung: **27.02.2019**
(21) Anmeldenummer: 14177191.5
(22) Anmeldetag: 16.07.2014
(51) Int. Cl.: A01D 69/00

(54) **Antriebssystem einer Erntemaschine**
Drive system of a harvesting machine
Système d'entraînement d'une moissonneuse

(30) Priorität: 19.09.2013 DE 102013110377
(43) Veröffentlichungstag der Anmeldung: 25.03.2015
(73) Patentinhaber: CLAAS Selbstfahrende Erntemaschinen GmbH, 33428 Harsewinkel (DE)
(72) Erfinder: Niermann, Martin, 33428 Harsewinkel (DE); Pellmann, Markus, 48336 Sassenberg (DE); Holtmann, Bernd, 48324 Sendenhorst (DE); Drewes, Rainer, 59320 Ennigerloh (DE)
(74) Vertreter: CLAAS Gruppe

(56) Entgegenhaltungen:
- EP-A1- 0 222 929
- DE-A1- 1 500 371

## Beschreibung

Die Erfindung betrifft gemäß dem Oberbegriff des Patentanspruchs 1 ein Antriebssystem einer Erntemaschine mit zumindest einem Zugmitteltrieb, innerhalb dessen von einem Antriebs- oder zumindest einem Vorgelegerad aus über ein Zugmittel zumindest ein Abtriebsrad angetrieben wird, wobei das zumindest eine Abtriebsrad und/oder das zumindest eine Vorgelegerad jeweils auf einem endseitigen Abschnitt einer in einem Maschinengestell der Erntemaschine gelagerten Welle angeordnet sind.

Weiterhin betrifft die Erfindung gemäß dem Oberbegriff des Patentanspruchs 2 ein Antriebssystem einer Erntemaschine mit zumindest einem Zugmitteltrieb, innerhalb dessen von einem Antriebs- oder zumindest einem Vorgelegerad aus zumindest ein Abtriebsrad über ein Zugmittel angetrieben wird, wobei das zumindest eine Vorgelegerad auf einem am Maschinengestell befestigten Wellenstummel gelagert ist.

Rotativ angetriebene Einrichtungen von Erntemaschinen, wie zum Beispiel von selbstfahrenden Mähdreschern, selbstfahrenden Feldhäckslern usw. stehen üblicherweise über Zugmitteltriebe mit einem Abtrieb einer Brennkraftmaschine in Verbindung, wobei es sich bei den Zugmitteltrieben zumeist um Riementriebe mit als Keilriemen oder Flachriemen ausgebildeten Zugmitteln handelt. Zugmitteltriebe von Erntemaschinen können aber auch als Kettentriebe ausgebildet sein, in welchen als Zugmittel eine Einfach- oder Doppelrollenkette verwendet wird. Ist die Erntemaschine als selbstfahrender Mähdrescher ausgebildet, so sind auf Grund von dessen baulichen Abmessungen und der üblichen Einbaulage der Brennkraftmaschine oberhalb einer Einrichtung zur Restkornabscheidung beziehungsweise hinter einem Korntank große Achsabstände und somit große Riemenlängen erforderlich. Wegen des begrenzten Bauraumes, der für die Anordnung der Riementriebe zur Verfügung steht, und zur Verringerung des baulichen Aufwandes werden einige Bauelement gemeinsam über einen Riementrieb, also in Form eines Mehrwellengetriebes, oder über Vorgelegestufen angetrieben. Außerdem können auch gekreuzte Riementriebe vorgesehen sein, wenn zwischen der Antriebsriemenscheibe und der Abtriebsriemenscheibe eine Drehrichtungsumkehr erzielt werden soll.

Handelt es sich beispielsweise um Riementriebe, so weisen die vorgenannten Vorgelegestufen als zur Aufnahme mehrerer Treibriemen gestaltete Vorgelegeräder auf, welche miteinander verbunden sind. Die Vorgelegeräder sind entweder drehbar auf einem Wellenstummel gelagert, der an einem Maschinengestell des Mähdreschers fixiert ist, oder drehfest auf einer Welle der rotativ angetriebenen Vorrichtung angeordnet. Bei einer entsprechenden Vorgelegestufe ist eine dieser Riemenscheiben als Abtriebsrad ausgebildet, über das die Vorgelegestufe von einem Riemen eines vorgeordneten Riementriebs angetrieben wird, während zumindest eine weitere Riemenscheibe als Antriebsrad einen Riemen eines weiteren Riementriebes antreibt. Die drehfest miteinander verbundenen Riemenscheiben können dabei zur Schaffung von Übersetzungsstufen mit unterschiedlichen Durchmessern ausgebildet sein.
Als Riemen- oder Kettentriebe ausgebildete Zugmitteltriebe weisen, wie bereits dargelegt, Anordnungen der Riemen- beziehungsweise Kettenräder auf, bei welchen das entsprechende Rad drehfest auf einer die jeweilige Vorrichtung antreibenden Welle angeordnet und die Welle über Radialwälzlager in Seitenwänden des Maschinengestells der Erntemaschine gelagert ist. Je nachdem, in welcher Ebene der Zugmitteltrieb verläuft, mit welchem Abstand also beispielsweise das Riemenrad zum Radialwälzlager und somit zum Maschinengestell verläuft, treten an dem fliegend gelagerten Wellenende erhebliche Biegemomente auf. Die diesen Biegemomenten zugrundeliegenden Achskräfte resultieren dabei aus den im Zugmitteltrieb auftretenden Umfangskräften und den Riemenspannkräften. Entsprechend große Biegemomente sind auch an Wellenstummeln, die Vorgelegräder aufnehmen und im Maschinengestell fixiert sind, zu verzeichnen.
Ein von mehreren Riementrieben gebildetes Antriebssystem eines selbstfahrenden Mähdreschers der im Oberbegriff des Patentanspruchs 1 angegebenen Gattung ist aus der DE 2 616 921 A1 bekannt. Dabei geht aus dieser Druckschrift ein auf einer Maschinenseite des Mähdreschers vorgesehenes Antriebssystem hervor, welches aus einem von einem Antriebsriemenscheibe einer Brennkraftmaschine zu einer Riemenscheibe eines Verteilergetriebes führenden Haupttrieb besteht. Von diesem als Vorgelegestufen ausgebildeten Verteilergetriebe gehen insgesamt vier Riementriebe aus, die demzufolge in unterschiedlichen Ebenen verlaufen, so dass an den einseitig gelagerten Wellenabschnitten, die mit den Abtriebsriemenscheiben verbunden sind, zum Teil erhebliche Biegemomente auftreten.

Es ist Aufgabe der vorliegenden Erfindung, die an Wellen rotativ angetriebener Vorrichtungen von Erntemaschinen oder an Wellenstummeln von Vorgelegestufen auftretenden Biegemomente zu reduzieren.
Diese Aufgabe wird, ausgehend vom Oberbegriff des Patentanspruchs 1, in Verbindung mit dessen kennzeichnenden Merkmalen gelöst. Gemäß dem kennzeichnenden Teil des Patentanspruchs 1 soll am Maschinengestell ein Stützelement vorgesehen sein, das an einem Ende der zumindest einen Welle oder an einer Nabe des zumindest einen Abtriebsrades und/oder des Antriebsrades und/oder des zumindest einen Vorgelegerades angreift und jeweils die Nabe oder das Ende der Welle radial lagert, wobei das Stützelement für Wartungs- und Reparaturarbeiten aus seiner Stützposition heraus bewegbar ist.
Ein entsprechendes Stützelement ist zum einen am Maschinengestell der Erntemaschine fixiert und ragt zum anderen bis an das Ende der Welle oder bis an die Nabe, so dass das Wellenende gegenüber dem Maschinengestell abgestützt ist. Folglich werden die vom Zugmitteltrieb auf die Welle übertragenen radialen Kräfte von dem Stützelement aufgefangen und auf das Maschinengestell übertragen. Dadurch können die Biegemomente, die anderenfalls an dem das Antriebsrad und/oder das Vorgelegerad aufnehmenden Wellenende auftreten würden, auf ein Minimum reduziert werden.
Das Stützelement ist dabei derart ausgebildet, dass es im Stillstand der Erntemaschine während eventuell durchzuführender Wartungs- oder Reparaturarbeiten aus seiner Stützposition herausgeschwenkt werden kann, so dass es diese Arbeiten nicht behindert. Das ist beispielsweise dann der Fall, wenn das als Treibriemen ausgebildete Zugmittel erneuert werden muss. Vor einer anschließenden Inbetriebnahme der Erntemaschine wird das Stützelement dann wieder in seine Stützposition, in welcher es das Ende der Welle gegenüber dem Maschinengestell abstützt, zurück bewegt und in dieser arretiert.

Demgegenüber sind nach der DE 26 16 921 A1 trotz des zum Teil großen Abstands der Riemenscheiben gegenüber dem Maschinengestell keine Bauelemente vorhanden, die das jeweilige Ende der Welle oder eine Nabe des Riemenrades, welches mit der Welle verbunden ist, abstützen. Es treten daher die bereits zuvor erwähnten hohen Biegemomente an den entsprechenden Wellenenden auf.

Oder es soll am Maschinengestell ein Stützelement vorgesehen sein, das an einem Ende der zumindest einen Welle und/oder an einem Ende eines Wellenstummels oder an einer Nabe des Antriebsrades, des zumindest einen Abtriebsrades und/oder des zumindest einen Vorgelegerades angreift und das Ende der Welle, den Wellenstummel beziehungsweise die Nabe radial lagert, wobei das Stützelement für Wartungs- und Reparaturarbeiten aus seiner Stützposition heraus bewegbar ist. Folglich kann das Vorgelegerad anstatt auf einem Ende einer ein Aggregat aufnehmenden Welle auf einem Wellenstummel gelagert sein, welcher am Maschinengestell drehfest fixiert ist. Auch in diesem Fall ist ein Stützelement vorgesehen, das entweder ein Ende einer Welle oder ein entsprechendes Ende eines Wellenstummels abstützt.

In weiterer Ausgestaltung der Erfindung soll am Ende der Welle und/oder des Wellenstummels ein Kugelkopf vorgesehen sein, der in der Stützposition des Stützelements in eine am Stützelement vorgesehene Kugelkalotte eingreift. Es handelt sich demnach um ein Kuppelsystem, welches eine Funktion aufweist, die der einer Anhängerkupplung eines Kraftfahrzeugs ähnelt. Dabei kann an der Kugelkalotte ein Verriegelungselement vorgesehen sein, welches den Kugelkopf selbsttätig in der Kugelkalotte festlegt oder welches manuell bedienbar ist. Auf diese Weise lässt sich das Ende der Welle oder des Wellenstummels mit baulich einfachen Mitteln am Stützelement festlegen.

Die Art dieser Verbindung berücksichtigt auch, dass eventuell zwischen der Welle und dem Stützelement geringfügige Winkelabweichungen auftreten, das heißt, dass das Stützelement nicht exakt im rechten Winkel zur Längsmittelachse der Welle oder des Wellenstummels verläuft. Wesentliche Vorteile bietet diese Art der Befestigung auch bei einem Stützelement, das über entsprechend ausgebildete Kuppelelemente mit mehreren Wellen verbunden ist. Selbstverständlich kann im Rahmen einer einfachen kinematischen Umkehr die jeweilige Kugelkalotte auch am Ende der Welle oder des Wellenstummels vorgesehen sein, wobei dann in entsprechender Weise der Kugelkopf am Stützelement befestigt ist.
Da die Welle rotativ angetrieben ist und das Abtriebsrad oder das Vorgelegerad drehfest auf dieser angeordnet sind, soll, wie weiterhin vorgeschlagen, der Kugelkopf frei drehbar am Ende der rotierenden Welle angeordnet sein. Dabei ist natürlich auch die zuvor vorgeschlagene kinematische Umkehr möglich. Bei einer Anordnung des Vorgelegerades auf einem feststehenden Wellenstummel kann natürlich der Kugelkopf drehfest mit dem Wellenstummel verbunden sein.
Alternativ dazu kann an dem Stützelement zumindest eine Lageraufnahme vorgesehen sein, die in der Stützposition des Stützelements über ein Gleitlager oder Wälzlager am Ende der Welle angreift. Das Gleit- oder Wälzlager kann nach einer Trennung des Stützelements vom Wellenende wahlweise auf diesem verbleiben, also von der Lageraufnahme entkuppelt werden, oder in der Lageraufnahme verbleiben.
Wenn der zuvor erläuterte Kugelkopf frei drehbar am Ende der rotierenden Welle angeordnet ist, so soll, wie weiterhin vorgeschlagen, der Kugelkopf mittels eines Axial-Radiallagers am Ende der Welle angeordnet sein. Daneben besteht natürlich auch die Möglichkeit, nur ein Radiallager vorzusehen und den Kugelkopf mittels eines Axialgleitlagers am Ende der Welle abzustützen. Gemäß einer vorteilhaften Ausgestaltung der Erfindung soll das Stützelement als Rahmen ausgebildet sein, der an den Enden mehrerer Wellen und/oder Wellenstummel angreift. Ein entsprechender Rahmen lässt sich ohne Weiteres an zumindest einer der Längsseite des Maschinengestells der Erntemaschine befestigen und, bezogen auf die Lage der jeweiligen Wellen mit Kuppelelementen versehen, über die dann der Rahmen an den Wellen und/oder Wellenstummeln angreift.
In weiterer Ausgestaltung dieser Ausbildung des Stützelements als Rahmen ist vorgesehen, dass der Rahmen schwenkbar am Maschinengestell geführt ist. Dadurch lässt sich der Rahmen aus der Stützposition heraus verschwenken, so dass die einzelnen Zugmitteltriebe für Reparatur- und Wartungsarbeiten zugänglich sind. Neben dieser schwenkbaren Anlenkung des Rahmens bestehen natürlich auch Möglichkeiten, diesen auf Längsführungen, die parallel zu den Wellen oder den Wellenstummeln verlaufen, zu führen, so dass der Rahmen gegenüber dem Maschinengestell in einer Linearbewegung nach außen verschoben werden kann. Diese Linearbewegung kann auch mit einer Schwenkbewegung gekoppelt werden, wobei eine derartige Ausbildung der Führung des Rahmens insbesondere dann sinnvoll ist, wenn der Rahmen über zylindrische Aufnahmen an den Wellenenden angreift. Dann muss zunächst eine lineare Bewegung nach außen ausgeführt werden, um diese Aufnahmen von den Wellen zu trennen, und anschließend kann der Rahmen nach oben verschwenkt werden. Entsprechende zylindrische Aufnahmen, die an den Wellenenden und Enden der Wellenstummel angreifen, können dabei als Innenringe von Radiallagern oder als Gleitlager ausgebildet sein.

Ein stabiler Rahmen, der die an den Enden der Wellen und Wellenstummel auftretenden radialen Kräfte auf das Maschinengestell überträgt und folglich die Enden der Wellen und Wellenstummel zuverlässig radial abstützt, kann im Wesentlichen aus, im Querschnitt gesehen, U- oder L-förmigen Profilen oder aus Rohrprofilen mit rechteckigem Querschnitt hergestellt sein. In einem entsprechenden Rahmen können weiterhin zu dessen Versteifung Querstreben oder Knotenbleche vorgesehen sein. Darüber hinaus besteht die Möglichkeit, den Rahmen als Träger für Verkleidungselemente vorzusehen, die mittelbar oder unmittelbar am Rahmen befestigt sind. Diese Verkleidungselemente, die unter anderem als Riemenschutz dienen, können dabei, je nach Fixierung am Rahmen, ebenfalls zu dessen Versteifung beitragen.

Zur weiteren Erläuterung der Erfindung wird auf die Zeichnung verwiesen, in der zwei Ausführungsbeispiele vereinfacht dargestellt sind.

Es zeigen:
- Figur 1: einen Ausschnitt einer Seitenansicht einer Erntemaschine, in dem ein als Riementrieb ausgebildeter Zugmitteltrieb sichtbar ist,
- Figur 2: eine Ansicht des in Figur 1 dargestellten Zugmitteltriebs nach gemäß Linie II-II in Figur 1 und
- Figur 3: eine Teilansicht von mehreren Zugmitteltrieben in einer Draufsicht auf eine Erntemaschine, wobei ein erfindungsgemäßes Stützelement im Längsschnitt dargestellt ist.

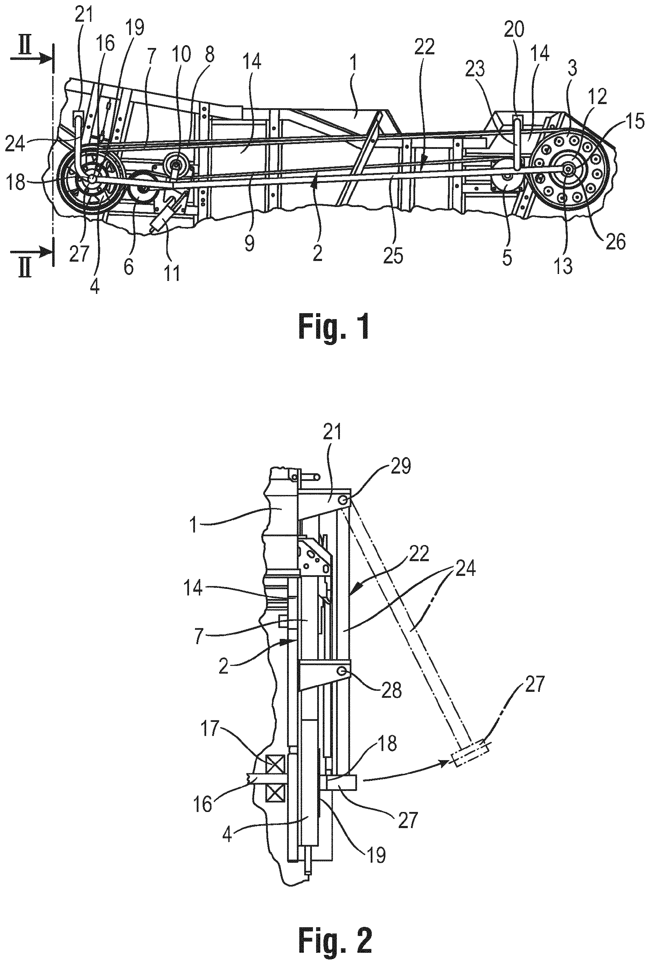

In den Figuren 1 und 2 ist mit 1 ein Maschinengestell einer Erntemaschine bezeichnet, an welchem ein Zugmitteltrieb 2 angeordnet ist. Dieser Zugmitteltrieb 2, der im vorliegenden Fall als Riementrieb ausgebildet ist, weist ein Antriebsrad 3 und ein Abtriebsrad 4 sowie ein als Flachriemen ausgebildetes Zugmittel 7 auf. Da sich das Antriebsrad 3 im Uhrzeigersinn dreht, ist das Zugmittel 7 zwischen dem Antriebsrad 3 und dem Abtriebsrad 4 jeweils als Lasttrum 8 oder als Lostrum 9 ausgebildet. Innerhalb des Lostrums 9 wird das Zugmittel 7 mit Hilfe einer Spannrolle 10 vorgespannt. Diese Spannrolle 10 greift an einer Lauffläche des Zugmittels 6 an und steht mit einem Spannzylinder 11 in Wirkverbindung. Außer der Spannrolle 10 sind im Lostrum 9 auch ein dem Antriebsrad 3 zugeordnetes Umlenkrad 5 sowie ein dem Abtriebsrad 4 zugeordnetes Umlenkrad 6 angeordnet, die dafür sorgen, dass das Zugmittel 7 mit einem vergrößerten Umschlingungswinkel am Antriebsrad 3 und am Abtriebsrad 4 wirkt, um ein höheres Antriebsdrehmoment übertragen zu können, ohne am Umfang des Antriebsrades 3 oder des Abtriebsrades 4 durchzurutschen.

Wie weiterhin aus den Figuren 1 und 2 hervorgeht, weist das Antriebsrad 4 eine Nabe 12 auf, mittels welcher das Antriebsrad 3 drehfest auf einer Welle 13 angeordnet ist. Diese Welle 13 ist in einer in der Figur 1 sichtbaren Seitenwand 14 des Maschinengestells 1 gelagert, wofür ein in den Figuren 1 und 2 nicht näher dargestelltes Radialwälzlager vorgesehen ist. Ein Ende 15 der Welle 13 steht dabei axial über das Radialwälzlager bzw. die Seitenwand 14 vor und nimmt das Antriebsrad 3 auf. Dabei ragt dieses Ende 15 auch über die Nabe 12 vor. Die Welle 13 nimmt ein nicht näher bezeichnetes Aggregat der Erntemaschine auf und kann beispielsweise von einem auf der gegenüberliegenden Seite des Maschinengestells 1 vorgesehenen weiteren Riementrieb aus angetrieben werden.

Das Abtriebsrad 4 ist, wie aus den Figuren 1 und 2 hervorgeht, drehfest auf einer Welle 16 angeordnet, die über ein Radialwälzlager 17 ebenfalls in der Seitenwand 14 des Maschinengestells 1 drehbar gelagert ist. Diese Welle 16 weist ein Ende 18 auf, das über das Radialwälzlager 17 beziehungsweise die Seitenwand 14 axial vorsteht, das Abtriebsrad 4 aufnimmt und eine Nabe 19 dieses Abtriebsrades 4 geringfügig überragt.

Weiterhin geht aus den beiden Figuren 1 und 2 hervor, dass an der Seitenwand 14 des Maschinengestells 1 zueinander beabstandet zwei gabelförmige Aufnahmen 20 und 21 vorgesehen sind, in denen ein Stützelement 22 schwenkbar geführt ist. Dieses Stützelement 22 ist bügelförmig ausgebildet und weist zwei Schenkel 23 und 24 sowie einen mit diesen verbundenen Längsträger 25 auf. Im Bereich von Enden des Längsträgers 25 sind, den Enden 15 und 18 der Wellen 13 und 16 zugewandt, Führungsbuchsen 26 und 27 vorgesehen, die die Enden 15 und 18 der Wellen 13 und 16 übergreifen, wobei diese in den Führungsbuchsen 26 und 27 frei drehbar geführt sind.

Die Anordnung der Führungsbuchse 27 am Schenkel 24 kann der Figur 2 entnommen werden. Dabei wird auch gezeigt, dass das Stützelement 22 in dieser Position, in der es mittels der Führungsbuchsen 26 und 27 die Enden 15 und 18 der Wellen 13 und 16 aufnimmt an einem Verriegelungselement 28 verriegelt ist. Wird diese Verriegelung gelöst, so kann das Stützelement 22 um die gabelförmigen Aufnahmen 20 und 21 verschwenkt werden, um am Zugmitteltrieb 2 Reparatur- oder Wartungsarbeiten durchzuführen. Diese Stellung des Stützelements 22 ist in der Figur 2 gestrichelt dargestellt, wobei ersichtlich ist, dass hierzu beispielsweise der Schenkel 24 um ein in der gabelförmigen Aufnahme 21 vorgesehenes Schwenklager 29 schwenkt.

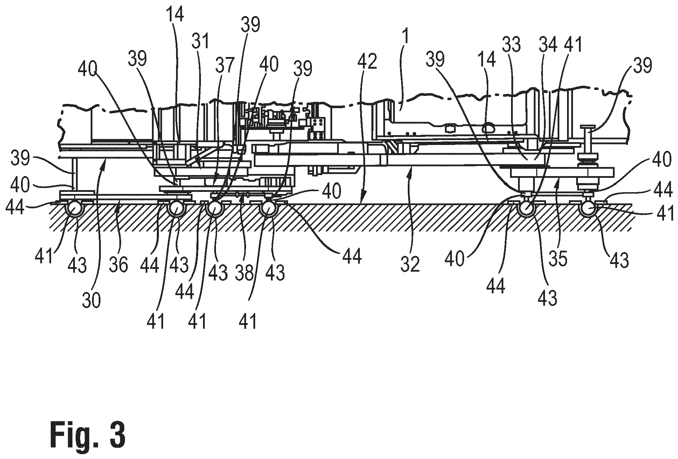

In der Figur 3 ist ein Antriebssystem dargestellt, das aus insgesamt sieben Zugmitteltrieben, von denen einige als Mehrwellengetriebe ausgebildet sind, besteht. In Übereinstimmung mit den Figuren 1 und 2 dient das Maschinengestell 1 der Erntemaschine, von dem nur ein Teilabschnitt in der Draufsicht dargestellt ist, zur Lagerung dieser Zugmitteltriebe. Ein Zugmitteltrieb 30 dient unter anderem zum Antrieb eines nicht näher dargestellten Erntevorsatzes der Erntemaschine. Ein Zugmitteltrieb 31 ist zum Antrieb einer Dresch- und Trenneinrichtung vorgesehen, während ein Zugmitteltrieb 32 ein Vorgelegerad 33 antreibt, das mit einem Abtriebsrad 34 einen Variatortrieb 35 zum Antrieb eines nicht näher dargestellten Strohhäckslers bildet. Dabei dient das Vorgelegerad 33 auch gleichzeitig zum Antrieb einer ebenfalls nicht dargestellten Einrichtung zur Restkornabscheidung.

Weitere Riementriebe 36, 37 und 38, also Zugmitteltriebe, sind als Hauptantrieb oder als Nebenantriebe zum Beispiel für eine Strohwendetrommel oder ein Spreugebläse der Reinigungseinrichtung vorgesehen. Aus der Figur 3 geht hervor, dass diese einzelnen Zugmitteltriebe 30, 31, 32, 35 und Riementriebe 36, 37, 38 zum Teil mit erheblichem Abstand zur Seitenwand 14 des Maschinengestells 1 verlaufen. Den einzelnen Antriebs-, Vorgelege- oder Abtriebsrädern dieser Zugmitteltriebe 30, 31, 32, 35, 36, 37 und 38 sind mit 39 bezeichnete Wellen zugeordnet, die über die Seitenwand 14 hinausragende Enden 40 aufweisen.

Jedes dieser Enden 40 der Wellen 39 ist mit einem Kugelkopf 41 versehen, der jeweils drehbar auf dem entsprechenden Ende 40 der Welle 39 gelagert ist. Ein Stützelement 42, das insgesamt als Rahmenkonstruktion ausgebildet ist, weist, den jeweiligen Kugelköpfen 41 zugewandt, Kugelkalotten 43 auf, in die die Kugelköpfe 41 in einer Stützposition des Stützelements 42 eingreifen. Dabei ist jeder Kugelkalotte 43 ein Verriegelungselement 44 zugeordnet, das den jeweiligen Kugelkopf 41 in der jeweiligen Kugelkalotte 43 festlegt.

Das gesamte rahmenartig ausgebildete Stützelement 42 kann, wie im Einzelnen nicht dargestellt, ähnlich der Ausbildung nach den Figuren 1 und 2 an der entsprechenden Seitenwand 14 des Maschinengestells schwenkbar gelagert sein, so dass es in eine Stützposition verschwenkbar ist oder aus dieser herausgeklappt wird. Anstelle der Führung der Enden der Wellen mittels der Kugelköpfe 41 in Kugelkalotten 43 des Stützelements 42 können natürlich auch Lösungen vorgesehen sein, bei denen das Stützelement 42 über zylindrisch ausgebildete Führungsbuchsen an den Enden 40 der Wellen 39 angreift.

Entscheidend ist, dass anstelle einer fliegenden Lagerung der Enden 40 der Welle 39 eine radiale Abstützung der Enden 40 mittels des Stützelements 42 vorgesehen ist, so dass die an den Wellenenden auftretenden Biegemomente auf ein Minimum reduziert werden. Wenn anstelle der Führung der Enden 40 der Welle 39 über Kugelköpfe 41 zylindrische Führungen verwendet werden, kann es zweckmäßig sein, das rahmenartige Stützelement 42 zunächst aus seiner Stützposition herauszuziehen, also in Achsrichtung der Welle 39 zu bewegen, und anschließend nach oben zu verschwenken. Es besteht natürlich auch die Möglichkeit, das rahmenartige Stützelement 42 nicht schwenkbar an der Seitenwand 14 anzuordnen, sondern insgesamt abnehmbar auszubilden. Außerdem kann das rahmenartig ausgebildete Stützelement 42 aus Profilen hergestellt sein, die einen U- oder L-förmigen Querschnitt aufweisen. Die entsprechenden Profile können auch rohrförmig sein, wobei sie vorzugsweise einen quadratischen Querschnitt haben.

### Bezugszeichen

- 1: Maschinengestell
- 2: Zugmitteltrieb
- 3: Antriebsrad
- 4: Abtriebsrad
- 5: Umlenkrad
- 6: Umlenkrad
- 7: Zugmittel
- 8: Lasttrum
- 9: Lostrum
- 10: Spannrolle
- 11: Spannzylinder
- 12: Nabe von 3
- 13: Welle von 3
- 14: Seitenwand von 1
- 15: Ende von 13
- 16: Welle von 4
- 17: Radialwälzlager
- 18: Ende von 16
- 19: Nabe von 4
- 20: gabelförmige Aufnahme
- 21: gabelförmige Aufnahme
- 22: Stützelement
- 23: Schenkel von 22
- 24: Schenkel von 22
- 25: Längsträger
- 26: Führungsbuchse
- 27: Führungsbuchse
- 28: Verriegelungselement
- 29: Schwenklager
- 30: Zugmitteltrieb
- 31: Zugmitteltrieb
- 32: Zugmitteltrieb
- 33: Vorgelegerad
- 34: Abtriebsrad
- 35: Variatortrieb
- 36: Riementrieb
- 37: Riementrieb
- 38: Riementrieb
- 39: Wellen
- 40: Enden der Wellen
- 41: Kugelkopf
- 42: Stützelement
- 43: Kugelkalotte
- 44: Verriegelungselement

## Patentansprüche

1. Erntemaschine mit einem Antriebssystem mit zumindest einem Zugmitteltrieb (2, 30, 31, 32, 35, 36, 37, 38), innerhalb dessen von einem Antriebsrad (3) aus über ein Zugmittel (7) zumindest ein Abtriebsrad (4) angetrieben wird,
wobei das Antriebsrad (3) eine Nabe (12) aufweist, mittels welcher das Antriebsrad (3) auf einer Welle (13, 39) angeordnet ist, wobei das zumindest eine Abtriebsrad (4) auf einem endseitigen Abschnitt einer in einem Maschinengestell (1) der Erntemaschine gelagerten Welle (16, 39) angeordnet ist, wobei diese Welle (16, 39) ein Ende (18) aufweist, welches das Abtriebsrad (4) aufnimmt und eine Nabe (19) dieses Abtriebsrades (4) überragt, **dadurch gekennzeichnet, dass**
am Maschinengestell (1) der Erntemaschine ein Stützelement (22, 42), welches an einer Seitenwand (14) des Maschinengestells (1) schwenkbar geführt ist, vorgesehen ist, das zum einen am Maschinengestell (1) der Erntemaschine fixiert ist und zum anderen
bis an ein Ende (15, 40) der Welle (13, 39) oder an die Nabe (12) des Antriebsrades (3) und/ oder
bis an ein Ende (18, 40) der Welle (16, 39) oder an die Nabe (19) des Abtriebsrades (4) ragt und jeweils die Nabe (12, 19) bzw. das Ende (15, 18, 40) der betreffenden Welle (13, 16, 39) radial lagert, so dass das Stützelement (22, 42) das Ende (15, 18, 40) der Welle (13, 16, 39) in einer Stützposition gegenüber dem Maschinengestellt (1) abstützt, wobei das Stützelement (22, 42) für Wartungs- und Reparaturarbeiten aus seiner Stützposition heraus bewegbar ist und vor Inbetriebnahme der Erntemaschine das Stützelement (22, 42) wieder in seine Stützposition, in welcher es das Ende (15, 18, 40) der zumindest einen Welle (13, 16, 39) gegenüber dem Maschinegestell (1) abstützt, zurückbewegbar und in dieser arretierbar ist.

2. Erntemaschine nach Anspruch 1, **dadurch gekennzeichnet, dass** am Ende (15, 18, 40) der Welle (13, 16, 39) oder eines Wellenstummels ein Kugelkopf (41) vorgesehen ist, der in der Stützposition des Stützelements (22, 42) in eine an dieser vorgesehene Kugelkalotte (43) eingreift.

3. Erntemaschine nach Anspruch 2, **dadurch gekennzeichnet, dass** der Kugelkopf (41) frei drehbar am Ende (15, 18, 40) der rotierenden Welle (13, 16, 39) angeordnet ist.

4. Erntemaschine nach Anspruch 3, **dadurch gekennzeichnet, dass** der Kugelkopf (41) mittels eines Axial-Radiallagers an dem Ende (15, 18, 40) der Welle (13, 16, 39) angeordnet ist.

5. Erntemaschine nach Anspruch 2, **dadurch gekennzeichnet, dass** der zumindest eine Kugelkopf (41) über eine Kuppeleinrichtung (44) an der zumindest einen Kugelkalotte (43) des Stützelements (42) arretierbar ist.

6. Erntemaschine nach Anspruch 1 ,**dadurch gekennzeichnet, dass** das Stützelement (22, 42) als Rahmen ausgebildet ist, der an den Enden (15, 18, 40) mehrerer Wellen (13, 16, 39) und/oder Wellenstummel angreift.

7. Erntemaschine nach Anspruch 6, **dadurch gekennzeichnet, dass** der Rahmen schwenkbar am Maschinengestell (1) geführt ist.

8. Erntemaschine nach Anspruch 6, **dadurch gekennzeichnet, dass** der Rahmen mittels parallel zu den Wellen (13, 16, 39) und/oder Wellenstummeln verlaufenden Längsführungen am Maschinengestell (1) geführt ist.

9. Erntemaschine nach den Ansprüchen 7 und 8, **dadurch gekennzeichnet, dass** der Rahmen am Maschinengestell (1) sowohl in Längsrichtung der Wellen (13, 16, 39) und/oder Wellenstummel verschiebbar als auch verschwenkbar angeordnet ist.

10. Erntemaschine nach Anspruch 6, **dadurch gekennzeichnet, dass** der Rahmen über Radiallager (17) an den Wellen (13, 16, 39) und/oder Wellenstummeln angreift.

11. Erntemaschine nach Anspruch 6, **dadurch gekennzeichnet, dass** der Rahmen im Wesentlichen aus, im Querschnitt gesehen, U- oder L-förmigen Profilen oder aus Rohrprofilen hergestellt ist.

12. Erntemaschine nach Anspruch 6, **dadurch gekennzeichnet, dass** mittelbar oder unmittelbar am Rahmen Verkleidungselemente angeordnet sind.

## Claims

1. A harvester comprising a drive system having at least one traction means drive (2, 30, 31, 32, 35, 36, 37, 38) within which at least one driven wheel (4) is driven from a drive wheel (3) by way of a traction means (7),
wherein the drive wheel (3) has a hub (12), by means of which the drive wheel (3) is arranged on a shaft (13, 39),
wherein the at least one driven wheel (4) is arranged on an end portion of a shaft (16, 39) mounted in a machine frame (1) of the harvester, wherein said shaft (16, 39) has an end (18) which receives the driven wheel (4) and projects beyond a hub (19) of the driven wheel (4),
**characterised in that** provided on the machine frame (1) of the harvester is a support element (22, 42) which is guided pivotably at a side wall (14) of the machine frame (1) and which on the one hand is fixed to the machine frame (1) of the harvester and which on the other hand projects to an end (15, 40) of the shaft (13, 39) or to the hub (12) of the drive wheel (3) and/or to an end (18, 40) of the shaft (16, 39) or to the hub (19) of the driven wheel (4) and radially mounts respectively the hub (12, 19) and the end (15, 18, 40) of the shaft (13, 16, 39) in question so that the support element (22, 42) supports the end (15, 18, 40) of the shaft (13, 16, 39) in a support position with respect to the machine frame (1), wherein the support element (22, 42) is moveable out of its support position for maintenance and repair operations and before the harvester is brought into operation the support element (22, 42) can be moved back again into its support position in which it supports the end (15, 18, 40) of the at least one shaft (13, 16, 39) with respect to the machine frame (1) and can be arrested in said support position.

2. A harvester according to claim 1 **characterised in that** provided at the end (15, 18, 40) of the shaft (13, 16, 39) or a shaft journal is a ball head (41) which in the support position of the support element (22, 42) engages into a ball cup (43) provided at same.

3. A harvester according to claim 2 **characterised in that** the ball head (41) is arranged freely rotatably at the end (15, 18, 40) of the rotating shaft (13, 16, 39).

4. A harvester according to claim 3 **characterised in that** the ball head (41) is arranged at the end (15, 18, 40) of the shaft (13, 16, 39) by means of an axial-radial bearing.

5. A harvester according to claim 2 **characterised in that** the at least one ball head (41) can be arrested by way of a coupling device (44) at the at least one ball cup (43) of the support element (42).

6. A harvester according to claim 1 **characterised in that** the support element (22, 42) is in the form of a frame which engages the ends (15, 18, 40) of a plurality of shafts (13, 16, 39) and/or shaft journals.

7. A harvester according to claim 6 **characterised in that** the frame is guided pivotably on the machine frame (1).

8. A harvester according to claim 6 **characterised in that** the frame is guided on the machine frame (1) by means of longitudinal guides extending parallel to the shafts (13, 16, 39) and/or shaft journals.

9. A harvester according to claims 7 and 8 **characterised in that** the frame is arranged on the machine frame (1) both displaceably in the longitudinal direction of the shafts (13, 16, 39) and/or shaft journals and also pivotably.

10. A harvester according to claim 6 **characterised in that** the frame engages the shafts (13, 16, 39) and/or shaft journals by way of radial bearings (17).

11. A harvester according to claim 6 **characterised in that** the frame is produced substantially from tubular profiles or profiles which viewed in cross-section are U-shaped or L-shaped.

12. A harvester according to claim 6 **characterised in that** casing elements are arranged directly or indirectly on the frame.

## Revendications

1. Machine de récolte comprenant un système d'entraînement avec au moins un mécanisme d'entraînement en traction (2, 30, 31, 32, 35, 36, 37, 38) à l'intérieur duquel au moins une roue menée (4) est entraînée par l'intermédiaire d'un moyen de traction (7) à partir d'une roue menante (3), la roue menante (3) comportant un moyeu (12) à l'aide duquel la roue menante (3) est disposée sur un arbre (13, 39), la au moins une roue menée (4) étant disposée sur une portion extrême d'un arbre (16, 39) monté dans un châssis de machine (1) de la machine de récolte, cet arbre (16, 39) comportant une extrémité (18) qui reçoit la roue menée (4) et dépasse d'un moyeu (19) de cette roue menée (4), **caractérisée en ce que** sur le châssis de machine (1) de la machine de récolte est prévu un élément d'appui (22, 42) qui est guidé à pivotement sur une paroi latérale (14) du châssis de machine (1), qui d'une part est fixé au châssis de machine (1) de la machine de récolte et d'autre part s'étend jusqu'à une extrémité (15, 40) de l'arbre (13, 39) ou au moyeu (12) de la roue menante (3) et/ou jusqu'à une extrémité (18, 40) de l'arbre (16, 39) ou au moyeu (19) de la roue menée (4) et soutient radialement le moyeu (12, 19), respectivement l'extrémité (15, 18, 40) de l'arbre correspondant (13, 16, 39), de sorte que l'élément d'appui (22, 42) supporte l'extrémité (15, 18, 40) de l'arbre (13, 16, 39) dans une position d'appui par rapport au châssis de machine (1), l'élément d'appui (22, 42) pouvant être retiré de sa position d'appui pour des travaux d'entretien et de réparation et, avant la mise en service de la machine de récolte, l'élément d'appui (22, 42) pouvant être ramené et être bloqué dans sa position d'appui dans laquelle il soutient l'extrémité (15, 18, 40) du au moins un arbre (13, 16, 39) par rapport au châssis de machine (1).

2. Machine de récolte selon la revendication 1, **caractérisée en ce qu'**à l'extrémité (15, 18, 40) de l'arbre (13, 16, 39) ou d'un bout d'arbre est prévue une tête sphérique (41) qui, dans la position d'appui de l'élément d'appui (22, 42) s'engage dans une calotte sphérique (43) prévue dans celui-ci.

3. Machine de récolte selon la revendication 2, **caractérisée en ce que** la tête sphérique (41) est disposée en libre rotation à l'extrémité (15, 18, 40) de l'arbre rotatif (13, 16, 39).

4. Machine de récolte selon la revendication 3, **caractérisée en ce que** la tête sphérique (41) est disposée à l'extrémité (15, 18, 40) de l'arbre (13, 16, 39) au moyen d'un palier axial-radial (15, 18, 40) .

5. Machine de récolte selon la revendication 2, **caractérisée en ce que** la au moins une tête sphérique (41) peut être bloquée sur la au moins une calotte sphérique (43) de l'élément d'appui (42) par l'intermédiaire d'un équipement d'accouplement (44).

6. Machine de récolte selon la revendication 1, **caractérisée en ce que** l'élément d'appui (22, 42) est conformé en cadre, lequel agit sur les extrémités (15, 18, 40) de plusieurs arbres (13, 16, 39) et/ou bouts d'arbre.

7. Machine de récolte selon la revendication 6, **caractérisée en ce que** le cadre est guidé à pivotement sur le châssis de machine (1).

8. Machine de récolte selon la revendication 6, **caractérisée en ce que** le cadre est guidé sur le châssis de machine (1) à l'aide de guides longitudinaux s'étendant parallèlement aux arbres (13, 16, 39) et/ou aux bouts d'arbre.

9. Machine de récolte selon les revendications 7 et 8, **caractérisée en ce que** le cadre est disposé sur le châssis de machine (1) aussi bien à coulissement dans la direction longitudinale des arbres (13, 16, 39) et/ou des bouts d'arbre qu'à pivotement.

10. Machine de récolte selon la revendication 6, **caractérisée en ce que** le cadre agit sur les arbres (13, 16, 39) et/ou les bouts d'arbre par l'intermédiaire de paliers radiaux (17).

11. Machine de récolte selon la revendication 6, **caractérisée en ce que** le cadre est fabriqué pour l'essentiel à partir de profilés en forme de U ou de L vus en coupe transversale ou à partir de profils tubulaires.

12. Machine de récolte selon la revendication 6, **caractérisée en ce que** des éléments d'habillage sont disposés indirectement ou directement sur le cadre.
